# EUROPEAN PATENT APPLICATION

(11) **EP 2 770 631 A1**
(43) Date of publication of application: **27.08.2014**
(21) Application number: 13156154.0
(22) Date of filing: 21.02.2013
(51) Int. Cl.: H02P 25/18, H02P 1/32, B67D 7/00

(54) **Controllable switch for a fuel dispenser**

(71) Applicant: Dresser Wayne AB, 202 15 Malmö (SE)
(72) Inventor: Vestergaard, Johnny, 231 97 Klagstorp (SE)
(74) Representative: Winblad, Christian

(57) **Abstract**

A fuel dispenser (200) comprising a three phase motor, wherein the motor (204) is connected to a fuel pump (212) and is coupled in wye or delta configuration, in order to adapted safely the motor to different voltage according to different mains supplies.

## Description

### Technical field

The field of the invention generally relates to the field of fuel dispensers and more particularly to a controllable switch for a fuel dispenser.

### Background art

A fuel dispenser generally comprises an electrical motor running on a predefined voltage. Different areas in the world have different mains supply present. This may be a problem, since the manufacturer of a motor for a fuel dispenser must know beforehand in what country or even part of a country the fuel dispenser will be installed. Further, a fuel dispenser can be sold second hand, and this may lead to problems if the new installation area has a different mains supply then the original installation position.

It is well-known that fuel, such as petrol or diesel, is a highly inflammable substance that must be handled with extreme care. An inherent property of fuel, that increases the risks of its handling, is its high volatility. For the above reasons, safety standards such as the UL standards for safety in North America, the ATEX directive in the EU or the European standard EN 13617 pertaining to petrol filling stations have been created for fuel handling in order to reduce the thereby induced risks.

According to those standards, electromechanical devices, such as the motor or the above mentioned switching device, must be enclosed in explosion-proof housings or isolated through the use of intrinsically safe circuitry in order to protect against the hazards of a spark igniting fuel vapors.

### Summary of the Invention

Embodiments of the invention include an electrical motor with windings arranged to be connected in different configurations (such as delta or y) and a switching device for safely switching between the two configurations depending on the power supply and a fuel dispenser that includes the same.

Such embodiments generally aim at eliminating or at least reducing the problems discussed above as well as other problems known in the art.

In one embodiment, a fuel dispenser comprises: a first and a second compartment, the first compartment comprising a three phase motor comprising a plurality of windings arranged to be connected in a first and a second configuration, a controllable switch connected to the three phase motor, the controllable switch having an open and a closed state, the controllable switch being arranged, in its open state, to connect the windings in the first configuration, the controllable switch being arranged, in its closed state, to connect the windings in the second configuration, wherein the controllable switch includes a control terminal and is arranged to receive a control signal from the second compartment via the control terminal for switching between the open and closed states.

It is noted that embodiments of the invention relates to all possible combinations of features recited in the claims. Generally, all terms used in the claims are to be interpreted according to their ordinary meaning in the technical field unless explicitly defined otherwise herein.

Other objectives, features and advantages of the present invention will appear from the following detailed disclosure as well as from the drawings.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 is a block diagram of a fuel dispenser according to embodiments.
Fig. 2 is a circuit diagram of an embodiment of the present invention.
Figs. 3-5 shows block diagrams of an exemplary set up of a controllable switch according to embodiments.

### Detailed description

A solution to the problem of not knowing beforehand what mains supply will be present at an installation area of a fuel dispenser may be to provide an electrical motor with windings arranged to be connected in different configurations (such as delta or y). A problem with this solution is how to provide a switching device for safely switching between the two configurations depending on the power supply.

Embodiments of the invention are based on the idea of providing one type of motor that safely can be adapted to be connected to different voltage according to the mains supply present. By providing a motor comprising windings arranged to be connected in different configurations, the motor is adapted to be connected to different mains supplies. Since the controllable switch is located in the first compartment but controlled from the second compartment, the safety requirements of the compartment from which the controllable switch is controlled may be different than the safety requirements of the compartment where the controllable switch is located. This is advantageous since the installed fuel dispenser is located in an environment where open flames, static electrical discharge or sparks may cause a dangerous situation. By controlling the controllable switch from a compartment not restricted to follow such strict safety requirements, the control of the controllable switch may be less technically complicated to achieve. This may lead to lower costs when adapting the motor for different voltages according to the mains supply present.

According to an embodiment of the invention, the first compartment is a hazardous zone and the second compartment is a safe zone, the first and second zone being isolated from each other. The first compartment of a fuel dispenser generally houses one or several pumps or flow control valves, each of which delivers a prescribed type of gasoline from underground tanks to a fuel dispensing nozzle.

The second compartment of the fuel dispenser often contains the electronics of the fuel dispenser. In the second compartment are mounted such customer communication devices as fuel and price indicators, receipt printers, credit card readers, cash note acceptor and storage units, operator key pads and the like. This electronics area is generally isolated from the above mentioned pump area, because of the dangerous vapours which exist in the pump area. The pump area has become known as the "hazardous zone" while the electronics area has been defined as the "safe zone".

By the term "isolated" should, in the context of present specification, be understood that the electronics and any other parts housed in the safe zone is safely separated from the components in the hazardous zone which actually handle the flammable liquid fuel according to the safety regulation in force in the country or area where the fuel dispenser is installed. In other terms, any flammable gas present in the first compartment should be prevented from entering the second compartment. The isolation may be achieved by for example providing galvanic isolation between electronics and any other parts housed in the safe zone and the components in the hazardous zone which actually handle the flammable liquid fuel. The isolation may also be achieved or improved by separating the two zones such that they are spaced apart. A further way of achieving or improving the isolation may be to add intrinsically safe passages between the two zones to allow communication over any electrical wires or similar from the hazardous zone to the safe zone. Yet another way of achieving the isolation may be to enclose the parts of the fuel dispenser where gas can be present with an explosion-proof housing. An example of a standard or directive pertaining to such an explosion-proof housing is the EXD which is a European protection technique addressing hazardous zones. An enclosure or junction box following the EXD standard is designed to contain an internal explosion and prevent transmission of sufficient energy to ignite a potentially flammable atmosphere outside the enclosure or junction box. Another solution may be to eliminate open sparking, for example at relay or switch contacts in the motor, in the first compartment leading to that the enclosure of the parts of the fuel dispenser where gas can be present do not need to be a explosion-proof housing but still needs to for example withstand impact and prevent ingress of solids and liquids. An example of a standard or directive pertaining to such a housing is the EXE which is a European protection technique addressing hazardous zones. According to the EXE standard should components within an enclosure or junction box not produce arcs, sparks or temperatures above that of ignition temperature of the surrounding atmosphere in normal working conditions. Any other suitable protection techniques addressing hazardous zones may be used. Moreover, a reliable sealing of a cable passing between the first and the second compartment may be crucial for preventing inflammable substance existing in the first compartment from being lead along the cable and up into the second compartment.

Access to the parts of the fuel dispenser located in the safe zone may be much less restricted than access to parts located in the hazardous zone. Since the controllable switch is controlled from the safe zone according to the present embodiment, the control of the controllable switch may not be restricted and thus less technically complicated to achieve.

The motor may be connected to a fuel pump arranged in the first compartment. As mentioned above, the fuel pump area may be an extremely dangerous area that needs to be enclosed in explosion-proof housings or isolated through the use of intrinsically safe circuitry, which means that the motor also needs to be enclosed or isolated in such a way. It is thus advantageous to control the controllable switch from another compartment.

According to a further embodiment of the present invention, the first configuration is a y coupling (also known as "wye coupling", "star coupling" or "t coupling") and the second is a delta coupling (also known as "triangle coupling", "pi coupling" or "mesh coupling"). An advantage of this embodiment is that these two configurations can support 230 volt and 400 volt, which are two common mains supply in the world. Other configurations are possible if different voltages are to be supported.

The controllable switch may be arranged to be in an open state in the absence of the control signal. This may be advantageous since if the signalling route for the control signal is broken or not functioning properly, the windings are connected such that the motor will not receive more power than the current threshold failure level for the motor, i.e. the motor will not get overloaded or overheated and break.

According to another embodiment of the invention, the control signal is an electrical signal. This may be advantageous since the fuel dispenser generally includes an electrical control signal for starting the motor meaning that the electricity needed for providing such control signals already is present at the fuel dispenser. An electrical control signal may further be used for controlling, and thus supporting, a variety of controllable switches as described below.

The controllable switch may include an optocoupler (also known as an opto-isolator, photocoupler or optical isolator) such that the controllable switch is arranged to be controlled by an optical signal. An advantage of using an optocoupler may be that galvanic isolation between the first and the second compartment can be achieved. With an optocoupler, the only contact between the first and the second compartment may be a beam of light. In some embodiments of the present invention, the optocoupler needs to be a high power optocoupler. Alternatively, should the control signal be provided in the form of an AC/DC signal, galvanic isolation between the motor and the circuitry in the second compartment may be achieved by one or more transformers.

The controllable switch may include a relay. An advantage of using a relay may be that the control signal may be a low voltage signal, such as 5, 12, or 24 volts. Thus, a fault in the relay may only pass a limited amount of power to the components in the hazardous zone. Moreover, a relay is a simple, cheap and reliable device and can switch many contacts, i.e. connections of the windings, at the same time.

According to a further embodiment of the invention, the controllable switch includes a solid state device such as a triac or a FET. An advantage of using a solid state type relay may be that the solid state relay produces no sparking, which may be advantageous in a ATEX-environment. A further advantage may be that a solid state relay may have increased lifetime, particularly if activated many times, as there are no moving parts to wear. Yet another advantage may be that a solid state relay is able to switch state much faster than any mechanical relay.

The fuel dispenser may further comprise a supply cable including wiring for connecting the motor to a power supply, wherein the supply cable comprises a conductor for energizing the controllable switch. This may be advantageous since when passing a cable into the first compartment through the compartment surface, the criteria of sealing that cable feed-through in a fuel dispenser environment is high. By placing the conductor for energizing the controllable switch in the already existing supply cable, no extra sealing may be needed in relation to the sealing already existing for the supply cable.

According to yet another embodiment of the present invention, the fuel dispenser may comprise control logic circuitry operatively connected to the motor and the control switch, wherein the control logic circuitry is arranged to put the controllable switch in a closed state prior to energizing the motor. It may shorten the lifetime of the controllable switch to switch state while there is voltage over the connection of the windings when the switch is made, as in the case that the power supply requires the windings to be connected in the second configuration, i.e. the controllable switch needs to be put in its closed state. Thus, by changing state of the controllable switch prior to energizing the motor, the lifetime of the switch may be prolonged.

According to some embodiments of the invention, the fuel dispenser comprises a ground terminal arranged outside the first compartment for connecting the control terminal to ground, wherein the controllable switch is arranged to be in its closed state when the control terminal is connected to the ground terminal. The ground terminal may be arranged in the second compartment. It may be advantageous to control the state of the controllable switch from space not under such strict safety requirements as the first compartment of the fuel dispenser of the present invention. The second compartment of the fuel dispenser may already comprise connection to ground. Thus, according to the present embodiment, simple implementation of the grounding of the control terminal may be achieved.

Embodiments of the invention will now be described more fully hereinafter with reference to the accompanying drawings, in which some embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

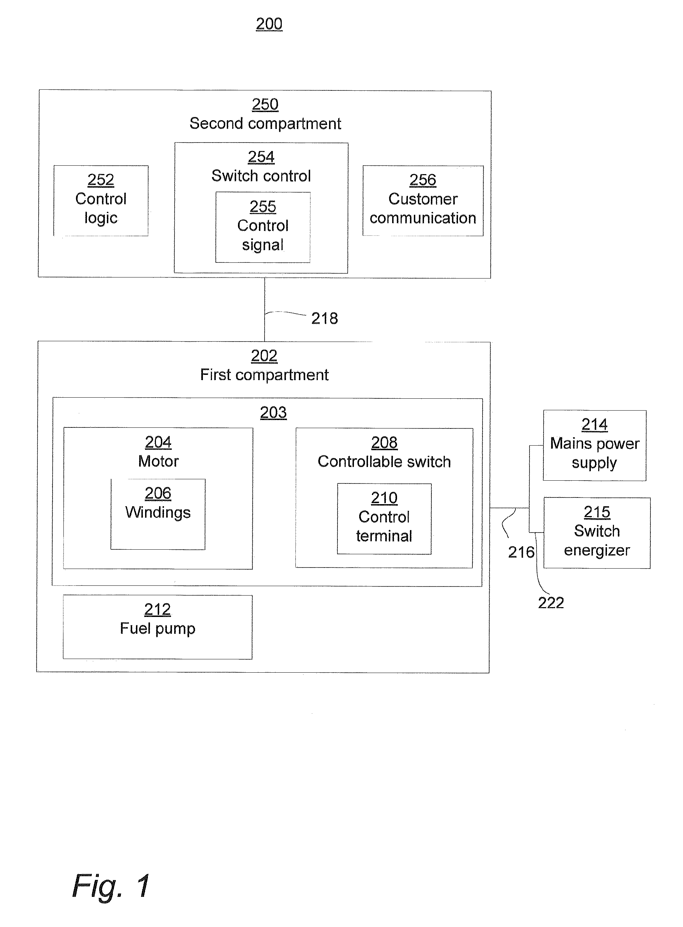

Fig. 1 shows by way of example a fuel dispenser 200 according to the present invention. The fuel dispenser 200 comprises a first compartment 202 and a second compartment 250. The second compartment 250 is generally placed above the first compartment 202. Since the fuel dispenser 200 generally is installed at a hazardous location where there are concentrations of flammable gases present, there are high safe regulations regarding the safety of the fuel dispenser. As the concentrations of the flammable gases are lower at a higher altitude, it is advantageous to place the second compartment 250, which comprises customer communication devices 256, above the first compartment. Thus, the safety requirements of the second compartment 250 may be lowered. The customer communication devices 256 may include price indicators and credit card readers and similar necessary devices needed for the customer to use the fuel dispenser.

The first compartment 202 comprises a motor 204 connected to a fuel pump 212. The motor comprises windings 206 which may be connected in different configurations as explained in detail below. The connection of the windings 206 are controlled by a controllable switch 208 via a control terminal 210. In some embodiments of the present invention, the controllable switch 208 and the motor 204 are housed in the same housing 203. The housing may for example be an explosion-proof housing. In other embodiments, the controllable switch 208 and the motor 204 are separately located in the first compartment 202. A cable 218 is drawn between the first compartment 202 and the second compartment 250 for connecting the devices of the first compartment 202 to control logic 252, a switch control 254 and any customer communication devices 256 in the second compartment 250. The cable 218 may for example connect the fuel pump 212 to a fuel indicator and price indicator in the customer communication devices 256 for informing the customer the current amount of fuel pumped and the price of this. The cable 218 is further connecting the switch control 254, which is producing a control signal 255, to the controllable switch 208 via the control terminal 210. The control signal 255 is then controlling the configurations of the windings 206 depending on a mains power supply 214 used for energizing the motor 204.

The switch control 254 according to one embodiment of the present invention, wherein the control signal 255 is an electrical signal, comprises a wire, connected to the control terminal 210. The wire may have a plug, and the switch control may further comprise a double plug socket. In this embodiment, the control terminal 210 is grounded by connecting the wire to one of the plugs in the double plug socket. The other plug in the double plug socket may just be a dead plug or it may lead the current in the wire back to an existing power supply such as the switch energizer 215. By grounding the control terminal 210 in the second compartment 250, the wire connected to the control terminal 210 transports the ground potential to the controllable switch 208 such that it controls the connection of the windings 206 to be configured in the second configuration. Consequently, by not grounding the control terminal 210, no such ground potential is received by the controllable switch and thereby the windings will be configured in the first configuration. This in turn adapts the motor to be connected to different voltages according to the mains power supply 214. The two plugs in the double plug socket are advantageously marked with the selectable configurations of the windings that may be achieved, for example with 230V and 400V. This reduces the risk of the installer making a mistake and connecting the windings in the wrong configuration. In further embodiments of the present invention, logic in the controllable switch 208, or logic connected to the controllable switch 208, may recognize the voltage of the mains power supply 214 automatically and control the configurations of the windings 206 accordingly.

When a cable 218 is drawn from the first compartment 202 to the second compartment 250, the need for proper sealing depends on the environmental circumstances. If the cable 218 for example is to be pulled from the hydraulics compartment, i.e. first compartment 202, up and into the electronics compartment, i.e. the second compartment 250, of the fuel dispenser 200, there is a risk of bringing inflammable substances into the electronics compartment and thus increasing the risk of explosion. Accordingly, the requirements regarding that type of sealing are high. The requirements may be lowered by letting the cable 218 extend through an air gap between the first and second compartments 202, 250 through which it is drawn. It may thus be advantageous to place the first compartment 202 and the second compartment 250 spaced apart. Moreover, it may thus be advantageous to include a conductor for carrying the control signal 255 in the already existing cable 218. The conductor may be a wire, as in the case of the control signal 255 being an electrical signal, or it may be an optical fibre, as in the case the control signal 255 being an optical signal. In further embodiments the cable 218 consists of several cables, which are all sealed properly, connecting different parts of the first compartment 202 to the second compartment 250 with each other.

The fuel dispenser 200 further comprises a supply cable 216 including wiring for connecting the motor to the mains power supply 214. Due to the safety regulation regarding sealing of cable entering compartments in a hazardous environment described above, it may be advantageously to include a conductor 222 for energizing the controllable switch via a switch energizer 215 in the supply cable 216. In further embodiments, the conductor 222 is a separate cable. The conductor 222 may be a wire, as in the case controllable switch 208 being an electrically controlled switch, or it may be an optical fibre, as in the case the controllable switch 208 being an optically controlled switch. In some embodiments of the present invention, the second compartment 250 comprises the mains power supply 214 and/or the switch energizer 215.

Moreover, the first and second compartments 202, 250 may be isolated from each other by means of galvanic isolation to prevent unwanted current from flowing between the first compartment 202 and the second compartment 250.

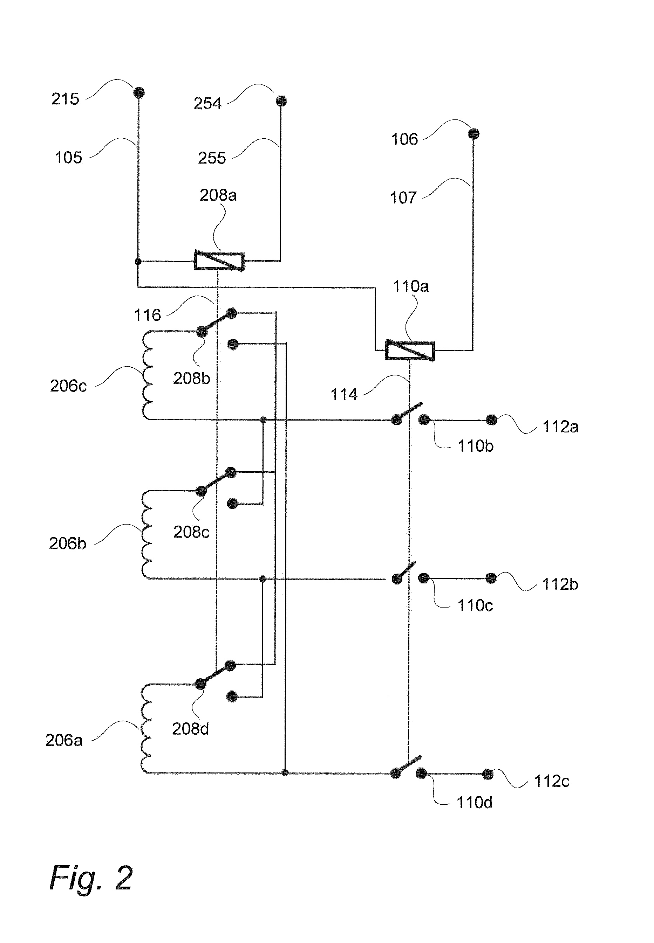

Fig. 2 shows a circuit diagram of parts of the fuel dispenser according to an embodiment of the present invention. In Fig. 2, a controllable switch 208a-d comprises a coil 208a which controls the state of the switches 208b-d simultaneously, as depicted by the dotted line 116. In Fig, 2, each of the switches 208b-d is shown in its open state, i.e. in its rest position. Consequently, the controllable switch 208a-d is shown in its open state. The switches 208b-d are configured to connect windings 206a-c in a first or a second configuration. Fig. 2 shows by way of example the windings 206a-c being configurable in a delta configuration and a y configuration. According to this embodiment, the controllable switch 208a-d in its open state is arranged to connect the windings 206a-c in its y configuration. The controllable switch 208a-d is put in its closed state by connecting the coil 208a to the ground, i.e. a switch control, 254 whilst the coil 208a is energized by a switch energizer 215 via an energizing signal 105. The energizing signal may for example be an electrical 24 voltage signal. The voltage of the electrical energizing signal 105 or the type of the energizing signal 105 depend on the type of controllable switch (208a-d). By connecting one of the terminals, e.g. the control terminal 210, of the coil 208a to the ground, a pre-defined ground potential is received by the control terminal 210, e.g. the control signal 255, and the windings 206a-c are connected according to the second configuration. If the coil 208a is not connected to ground 254 or if no energizing signal 105 is received by the coil 208a, the controllable switch 208a-d will be in its open state, e.g. the windings 206a-c are connected according to the first configuration.

The windings 206a-c are connected to a three phase mains supply 112a-c, each winding 206a-c is connected to one mains supply input 112a-c. An on-off switch 110a-d is controlling the energizing of the windings 206a-c, e.g. starting or stopping a motor (not shown) comprising the windings 206a-c. The on-off switch 110a-d comprises a coil 110a which controls the state of the switches 110b-d simultaneously, as depicted by the dotted line 114. The on-off switch 110a-d is connecting the windings 206a-c to their respective mains supply input 112a-c by grounding 106 a control terminal of the coil 110a whilst the coil 110a is energized by a switch energizer 215 via an energizing signal 105, for example a 24 voltage signal. If the coil 110a is not connected to ground 106 or if no energizing signal 105 is received by the coil 110a, the on-off switch does not connect the windings 206a-c to their respective mains supply input 112a-c. Consequently, the motor will be stopped or not started. According to the present embodiment, the energizing signal 105 used for the controllable switch 208a-d and the on-off switch 110a-d is the same signal. In some embodiments, in an installed and functioning fuel dispenser, the energizing signal 105 will always be present. In these embodiments, the on-off status of the motor comprising the windings 206a-c will be controlled by grounding 106 or not grounding the on-off switch 110a-d. Consequently, the configuration of the windings 206a-c will be controlled by grounding 254 or not grounding the controllable switch 208a-d. As mentioned above, according to the embodiment shown in Fig. 2, the windings 206a-c are configured to be connected in their y configuration by default, e.g. if the controllable switch 208a-d is not receiving any energizing signal 105 or if the controllable switch 208a-d is receiving the energizing signal 105 but not being connected to the ground 254. Consequently, the motor comprising the windings 206a-c may not risk to be overheated or overloaded if the controllable switch is broken or if the connection to ground 254 for producing the corresponding control signals 255 is interrupted since the windings 206a-c are connected for receiving for example 400 voltage by default. A further way of controlling the on-off switch 110a-d and/or the controllable switch 208a-d may be to always connect the coil 110a, 208a to ground and then control the switch 110a-d, 208a-d by either energizing it or not. In this case, the energizing signal 105 will act as the control signal 107, 255. The on-off switch 110a-d and the controllable switch 208a-d may in some embodiments be connected to ground by the same wire and be individually controlled by two energizing signals.

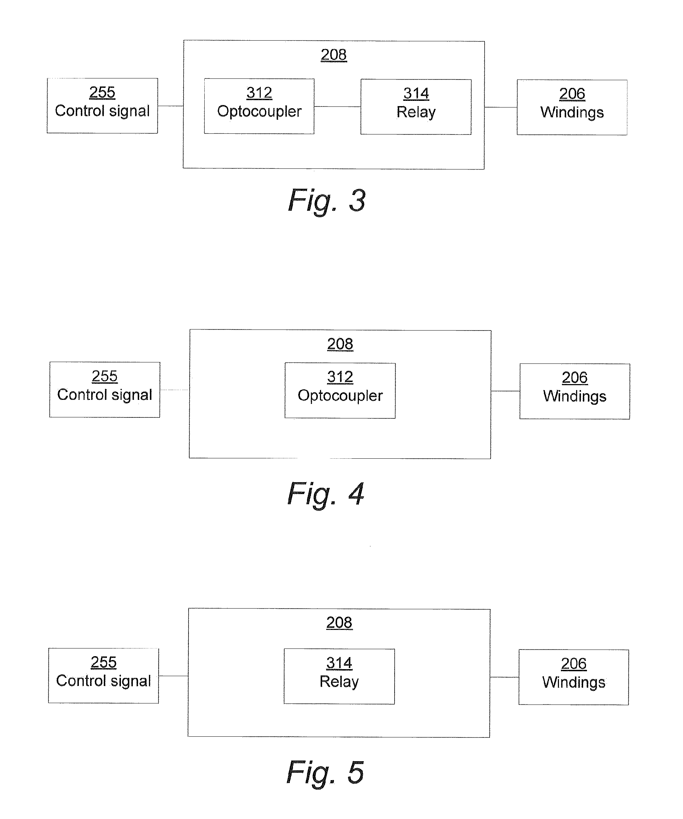

Figs. 3-5 each illustrates by way of example a block diagram of an implementation of a controllable switch 208 used for controlling the windings 206 of a motor 204 in a fuel dispenser 200 according to embodiments of the present invention. Each controllable switch 208 is controlled by a control signal 255. The setup of the controllable switch 208 is advantageously adapted to control the configurations of the windings 206 by a low-power signal with complete galvanic isolation between the controller of the control signal and the windings 206. In Fig 3, the controllable switch 208 comprises an optocoupler 312 and a relay 314. The optocoupler 312 is controlled by an optical control signal 255. When the optocoupler 312 receives the optical control signal, the optocoupler 312 is controlling the electrically operated relay 314 by either generating electrical energy directly or by modulating electric current flowing from an external power source (not shown). The external power source may advantageously be a low-power power source such as a 24 volt power supply. When the relay 314 receives the electrical signal, the switching mechanism, controlling the configurations of the windings 206, is operated. The relay 314 is preferably able to handle the high power required to directly control an electric motor comprising the windings 206. This type of relay is known as a contactor. In the setup 300 shown in fig. 3, the relay 314 is thus controlled by a circuit, e.g. the optocoupler, which has a much lower power level than the switched circuit. The relay 314 may in this embodiment be of solid state type since the galvanic isolation is achieved by the optocoupler 312. The relay 314 may in further embodiments be implemented in the form of one or several different relays. In the latter case, the different relays may be of same or different types. For example, the relay 314 may comprise a solid state relay connected to a mechanically operated relay.

Fig 4 shows by way of example a second setup 302 of a controllable switch comprising only an optocoupler 312. In this setup, the optocoupler 312 must be a high power optocoupler to be able to directly control an electric motor comprising the windings 206. By using the optocoupler 312 for controlling the connections of the windings 206, complete galvanic isolation is achieved as described above.

Fig 5 shows by way of example a third setup 304 of a controllable switch 208 comprising a relay 314. To ensure complete galvanic isolation of the controllable switch 208, the relay 314 should not only comprise one or several solid state relays. If the relay comprises only one or several solid state relays, the galvanic isolation is preferably achieved by some other means than by the controllable switch 208. The relay 314 may be implemented in the form of one or several different relays. In the latter case, the different relays may be of same or different types. For example, the relay may comprise a solid state relay connected to a mechanically operated relay. The relay 314 may in other embodiments only comprise a single mechanically operated relay controlling the windings 206.

The person skilled in the art realizes that the present invention by no means is limited to the preferred embodiments described above. On the contrary, many modifications and variations are possible within the scope of the appended claims. For example, the switch control 254 may further comprise a voltage sensitive device to control that the controllable switch 208 is functioning as it should. If no voltage is received from the controllable switch, warning means may be activated or the fuel dispenser may be shut down or some other preventive measure may be performed.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A fuel dispenser (200) comprising a first (202) and a second compartment (250),
the first compartment (202) comprising:
a three phase motor (204) comprising a plurality of windings (206, 206a-c) arranged to be connected in a first and a second configuration,
a controllable switch (208, 208a-d) connected to the three phase motor (204), the controllable switch (208, 208a-d) having an open and a closed state,
the controllable switch (208, 208a-d) being arranged, in its open state, to connect the windings (206, 206a-c) in the first configuration,
the controllable switch (208, 208a-d) being arranged, in its closed state, to connect the windings (206, 206a-c) in the second configuration,
wherein
the controllable switch (208, 208a-d) includes a control terminal (210) and is arranged to receive a control signal (255) from the second compartment (250) via the control terminal (210) for switching between the open and closed states.

2. The fuel dispenser (200) according to claim 1, wherein the first compartment (202) is a hazardous zone and the second compartment (250) is a safe zone, the first and second zone being isolated from each other.

3. The fuel dispenser (200) according to claim 1, wherein the motor (204) is connected to a fuel pump (212) arranged in the first compartment (202).

4. The fuel dispenser (200) according to claim 1, wherein the first configuration is a y coupling and the second configuration is a delta coupling.

5. The fuel dispenser according to claim 1, wherein the controllable switch (208, 208a-d) is arranged to be in an open state in the absence of the control signal (255).

6. The fuel dispenser (200) according to claim 1, wherein the control signal (255) is an electrical signal.

7. The fuel dispenser (200) according to claim 1, wherein controllable switch (208, 208a-d) includes an optocoupler (312) such that the controllable switch (208, 208a-d) is arranged to be controlled by an optical signal (255).

8. The fuel dispenser (200) according to claim 1, wherein controllable switch (208, 208a-d) includes a relay (314).

9. The fuel dispenser (200) according to claim 1, wherein the controllable switch (208, 208a-d) includes a solid state device such as a triac or a FET.

10. The fuel dispenser (200) according to claim 1, the fuel dispenser (200) comprising a supply cable (216) including wiring for connecting the motor (204) to a power supply (214), wherein the supply cable (216) comprises a conductor (222) for energizing the controllable switch (208).

11. The fuel dispenser (200) according to claim 10 comprising control logic circuitry (252) operatively connected to the motor (204) and the controllable switch (208, 208a-d), wherein the control logic circuitry (252) is arranged to put the controllable switch (208, 208a-d) in a closed state prior to energizing the motor (204).

12. The fuel dispenser (200) according to claim 1, comprising a ground terminal (254) arranged outside the first compartment (202) for connecting the control terminal (210) to ground, wherein the controllable switch (208, 208a-d) is arranged to be in its closed state when the control terminal (210) is connected to the ground terminal (254).

13. The fuel dispenser (200) according to claim 12, wherein the ground terminal (254) is arranged in the second compartment (250).
